(19) **Europäisches Patentamt / European Patent Office / Office européen des brevets**

(11) **EP 1 335 595 B1**

(12) **EUROPEAN PATENT SPECIFICATION**

(45) Date of publication and mention
of the grant of the patent:
**04.05.2011 Bulletin 2011/18**

(51) Int Cl.:
*H04N 5/913* (2006.01)

(21) Application number: **03007089.0**

(22) Date of filing: **25.02.2000**

(54) **Method and apparatus for controlling copying of a video or audio signal using watermarks**

Verfahren und Gerät zur Kontrolle des Kopierens eines Video- oder Audiosignales unter Verwendung von Wasserzeichen

Procédé et appareil pour contrôler la copie d'un signal vidéo ou audio, en utilisant des filigranes

(84) Designated Contracting States:
**AT BE CH CY DE DK ES FI FR GB GR IE IT LI LU MC NL PT SE**

(30) Priority: **25.02.1999 US 121806 P**
**16.02.2000 US 505621**

(43) Date of publication of application:
**13.08.2003 Bulletin 2003/33**

(62) Document number(s) of the earlier application(s) in accordance with Art. 76 EPC:
**00911979.3 / 1 155 569**

(73) Proprietor: **MACROVISION CORPORATION**
**Santa Clara, CA 95050 (US)**

(72) Inventors:
• **Hollar, Mark A.**
**Palo Alto,**
**California 94306 (US)**
• **Wonfor, Peter**
**El Granada,**
**California 94018 (US)**

(74) Representative: **Needle, Jacqueline**
**Beck Greener**
**Fulwood House**
**12 Fulwood Place**
**London**
**WC1V 6HR (GB)**

(56) References cited:
| | |
|---|---|
| **EP-A- 0 860 997** | **EP-A- 0 903 736** |
| **WO-A-97/13248** | **WO-A-99/11064** |
| **US-A- 5 530 759** | |

**Description**

The present invention relates to a method and apparatus for controlling copying of a video or audio signal using watermarks. Embodiments of the invention may be used with audio and video services, such as pay-to-record or pay-to-tape, provided in a cable television system, a direct broadcast satellite system, or a public computer network (internet), for example.

Watermarks are well known in the digital video field. Watermarks are signals embedded in an otherwise conventional video or audio signal which provide a unique identifier and thus discourage or prevent unauthorized copying or use. The watermark is not apparent to a person viewing the watermarked signal, but is readily detected by appropriate circuitry.

EP-A-0860997 describes a system for inserting two or more watermarks into digital data signals, for example, digital images. The watermarks provide authentication information and can be used to prevent copying of the digital image data.

The present invention seeks to provide a method and system of controlling copying which uses watermarks and which enables pay-to-record control.

According to a first aspect of the present invention there is provided a method of controlling transmitting of a video or audio signal having a first embedded watermark, comprising the steps of:

receiving said video or audio signal and detecting whether said first watermark is present therein;
determining if recording of the video or audio signal is to be prevented;
if recording is to be prevented and if said first watermark is present in the video or audio signal, embedding a second watermark in the video or audio signal with the first embedded watermark, and
transmitting the video or audio signal with the first and second watermarks.

Embodiments of the invention enable the prevention and control of copying and particularly the distribution of unauthorized copies. For example, a video or audio signal having a first embedded watermark may be considered as a one-copy-allowed state. The embedding of a second watermark, such that the video or audio signal includes both first and second watermarks is considered to be the no-more-copies allowed state.

Thus, in embodiments of the invention, the set top box and/or video or audio recorder may be arranged to add the second watermark to the video or audio signal including the first watermark. This prevents serial copying of video or audio content, since the recorder, for example, makes the appropriate state change from one-copy-allowed to no-more-copies during the record process.

The invention also extends to a set top video or audio box for connection to an associated receiver, as defined in claim 6.

Embodiments of the present invention will hereinafter be described, by way of example, with reference to the accompanying drawings, in which:

Figure 1A shows a block diagram of a system in accordance with the disclosure; Figure 1B shows a detail of Figure 1A; Figure 1C shows a variant of Figure 1A; Figure 1D shows a variant of Figure 1C;
Figure 2 shows playback in accordance with this disclosure;
Figure 3 shows a video recorder for the Figure 1A system;
Figure 4 shows a block diagram of another system;
Figure 5 shows a video recorder for the Figure 4 system;
Figure 6A shows the system of Figure 1; Figure 6B shows a combination set top box and recorder;
Figure 7 shows the system of Figure 4 modified for audio; and
Figure 8 shows an audio recorder for the Figure 7 system.

A system is described herein which utilizes the existing infrastructure and legal advantage given to video line 21 (in the VBI in NTSC-TV) data and combines it with video watermarks to generate revenue by allowing controlled copying of video signals. Video line 21 (in NTSC-TV, which is the US television standard) is currently used to carry closed caption data and parental blocking (V-chip) data in accordance with two significant standards: ANSI/EIA-608 and ANSI/EIA-744. (Other television standards have similar features and may be used similarly).

Various US laws require television sets sold in the USA to react to data carried by line 21 and require that the data on line 21 be preserved during transmission through various paths. In addition, US FCC rules derived from the US Telecommunications Act of 1996 also require TV receivers or personal computers ("PCs") with video tuner cards, and with displays greater than 13" in size, to provide parental blocking (V-chip control).

The legal requirement (in the US, at least) to provide parental blocking ensures that PCs as a potential class of storage/recording device, must recognise video line 21 data. Without this legal requirement, PCs might make that bandwidth/capacity available for other functions. As described in EIA-608, field 1, line 21 is allowed only to have closed captioning or the original picture content. (TV pictures have two fields per frame). No other data services are allowed here. Field 2, line 21 may however have closed captioning, parental blocking or other extended data services. The protocol provided with extended data services is flexible enough that the protocol can accommodate a ticket or other associated data.

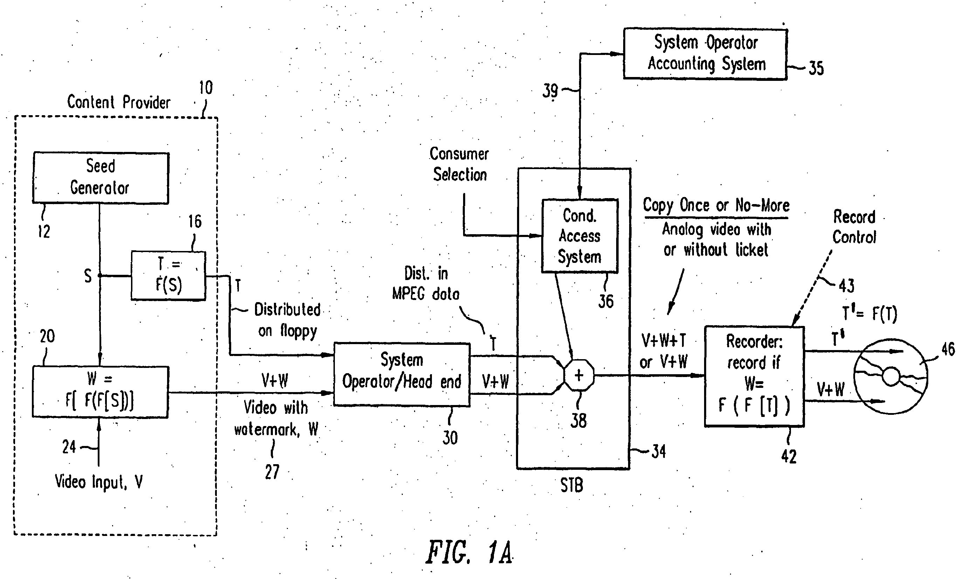

To follow the path of the ticket as shown in Figure 1A, at the time of content (program) preparation by the content provider 10, a seed (number) S is generated by a seed generator 12, which may be, for example, a random number generator. This seed S is then subject to a fixed and secure one-way hash function F by hash function element 16. This is a one-way hash (compression) function of the type well known in the cryptographic field to determine the original ticket T. The seed S is then provided to a watermark embedder 20. It cannot be reliably known that the system operator is a trusted party such that making the seed accessible to him has the potential to weaken system security. Hence, as illustrated in Figure 1A, the content provider, not the system operator, does this.

The system illustrated is a hybrid digital-analog TV system. Upstream of a set top box ("STB") 34, the signal is digital; the STB outputs an analog signal or optionally both a digital and analog form of the video signal. Signal transmission over other channels (e.g., the internet) is an alternative.

Each block in the figures represents a conventional integrated circuit or commercially available component (circuit or software) or product or such a conventional element modified as is described herein. The nature of the connections between the blocks and components as illustrated , and any necessary modification thereto, will be within the competence of those skilled in the art. For instance, the content provider block 10 could be embodied in a suitably modified computer, with the seed, ticket and watermark generation carried out by software executed by the computer's central processing unit.

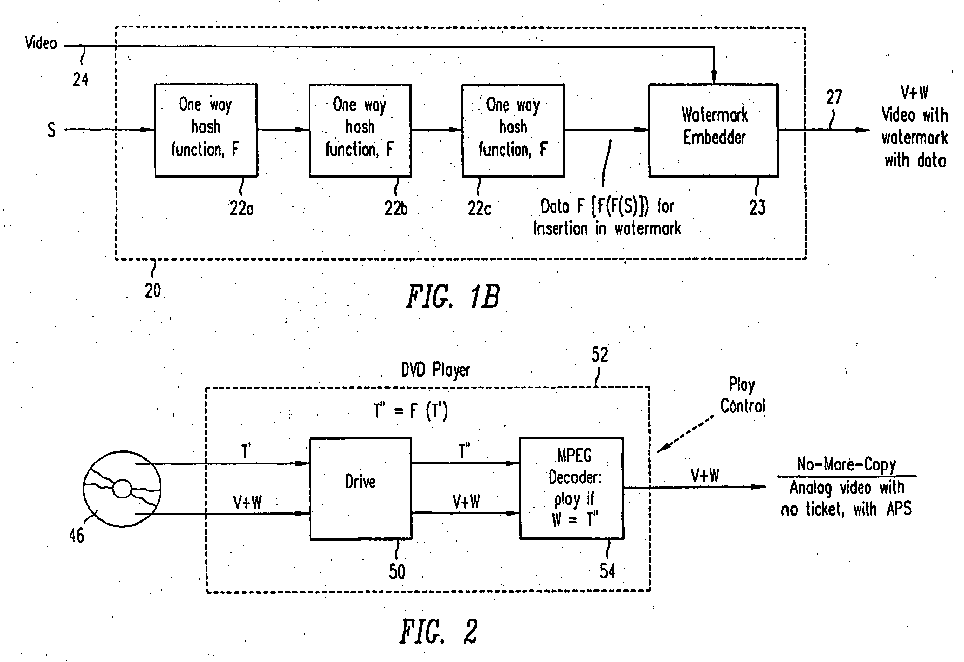

The watermark embedder 20 submits the seed S recursively to the function F three times, as shown in detail in Figure 1B, to generate a watermark W which is then conventionally added to, that is, embedded in, the video signal V applied at a video input port 24.

As is illustrated in Figure 1B, watermark embedder 20 includes three one way hash function F blocks 22a, 22b, and 22c and an element 23 which inserts the resulting data $F[F(F(S))]$ as the watermark in the video. The output signal of embedder 23 is on line 27, as is also indicated in Figure 1A. The watermark is added in a linear or non-linear fashion using any available watermarking technique. In some cases, to convey a sufficient number of bits to guarantee a ticket of appropriate cryptographic complexity, the ticket is transmitted as a series of characters varying over time. These digital communication methods for conveying m-bytes of data across an n-bit wide interface are well understood, and any available protocol can be used, including, for example, TCP/IP or PPP.

The video signal with the watermark V+W and the ticket T may be independently transmitted to the system (cable or satellite TV) operator/head end 30, or optionally the content provider can use a standard closed captioning encoder to embed the ticket T on, e.g., video line 21. (The distinction here between the content provider and system operator is arbitrary and only for purposes of illustration). An example of a method for independently transmitting the ticket T to the system operator would be to provide it on a floppy disk. The system operator could then send it through the system as MPEG user data.

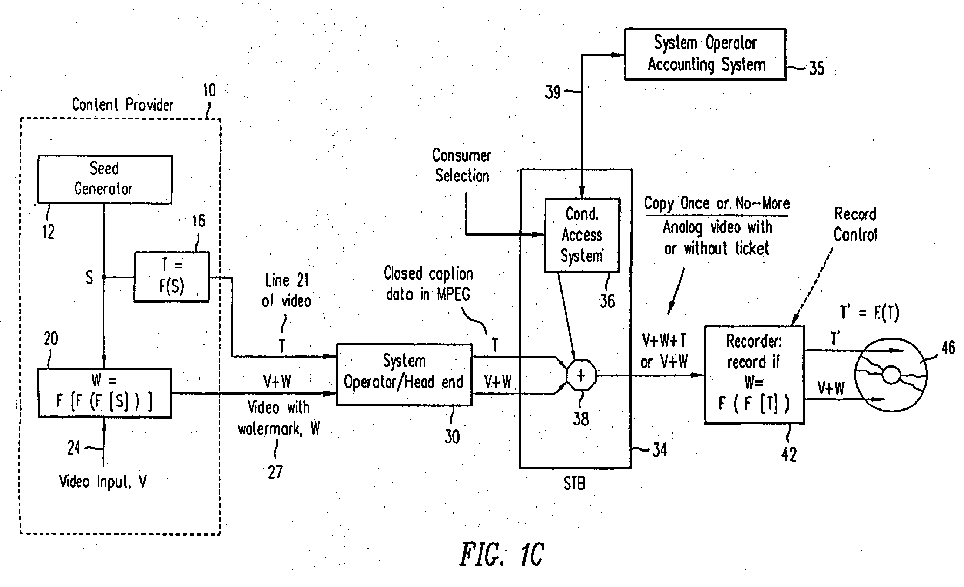

The line 21 method of distributing the ticket, as illustrated in Figure 1C, has the advantage that it allows the system operator to deploy the watermark/ticket addition system at its head end 30 with no changes to the remainder of its existing infrastructure. (Figure 1C is otherwise identical to Figure 1A). In this second case, the (ticket T) data on line 21 of the video is extracted from the video signal and sent as MPEG data by the system's MPEG encoder. Without this, line 21 would be treated like video and would potentially be subject to the usual video compression artifacts, as transforms like the discrete cosine transform are applied, quantizations are made and bit rate reduction occurs. This undesirably would corrupt the ticket.

In Figure 1C, from the system operator's head end 30, the ticket T is conveyed as line 21 MPEG data in the MPEG stream's video elementary stream while the video with watermark V+W is sent as compressed picture data. The ticket T is provided to all STBs 34 via conventional broadcast and reception of the MPEG data stream.

Two classes of STBs 34 must be considered: legacy (old) STBs and new (upgraded) STBs. Legacy STBs are unable to have their internal microcontroller software upgraded. Thus they treat the ticket T on line 21 as standard closed caption, teletext or extended data. All of this information which is provided to the STB is output in the analog video signal as line 21 data.

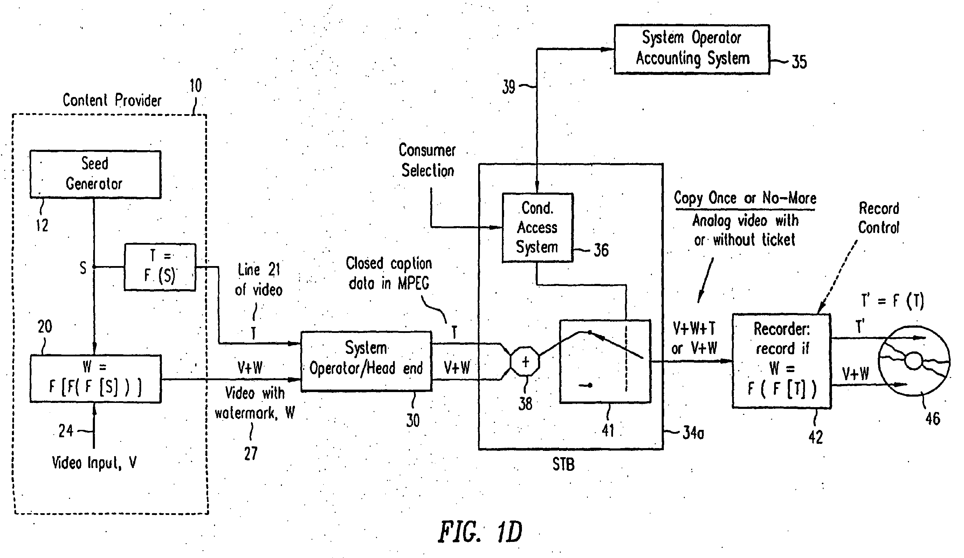

Consumers with legacy STBs are not inconvenienced or prevented from making a recording. This is a disadvantage from the content provider's standpoint, since he may in fact accrue less revenue as a result. However, television industry practice with respect to time shifting (video recording) may indicate that such consumers should not be disadvantaged. Thus the system as described here ensures that the consumer is in fact not disadvantaged and that legacy STBs provide the ticket on their video output. As shown in Figures 1A, 1C and 1D, the STB 34 outputs the video with the watermark and with the ticket, V+W+T. In the case of Figure 1D, the ticket T is not controllable by the consumer due to the "legacy" design of the STB 34a. Here the only possible user control is pay-and-view or not-pay-and-not-view. This is controlled by the switch 41 shown in the STB 34a of Figure 1D.

New or upgraded STBs as described herein can provide additional control to the consumer and also allow accrual of greater revenue for the system operator and content provider. In this case, the consumer can select whether he wishes to simply view the program or whether he wishes to view and record/store it. When he makes his selection through a standard interface with an onscreen display and remote control, the STBs conditional access (CA) sub-system 36 stores an indicator of the activity - view only or view and record - which the consumer selected.

This indicator is transmitted to the system operator via a conventional cable/satellite TV/internet return patch 39 (Figures 1A, 1C) which includes, for example, a telephone modem using the telephone lines or, in those cable TV systems which support it, a conventional cable plant return path. Return path 39 allows the system operator to charge the consumer for his selection. A report of the access is made to the conventional system operator accounting system 35 for consumer billing purposes, via return path 39.

After the conditional access subs-system 36 has stored the indication of the consumer's request, then the addition of the ticket T to the video occurs. If the content is only to be viewed, then the video is provided out of the STB 34 without the ticket: V+W. If the content is to be viewed and recorded, then the video is provided out of the STB 34 with the ticket: V+W+T. Adding the ticket T to the video V consists now of either introducing the ticket data T in the encoder integrated circuit ("IC") in the STB 34 or alternatively in an ATSC RF remodulator integrated circuit located in STB 34. It is this encoder IC which outputs an analog video signal to the associated TV receiver (not shown) connected to the STB 34 based on the input digital video signal. It is the RF remodulator which outputs an ATSC digital TV signal. In this case, the ticket T is controllable by the consumer via his STB 34.

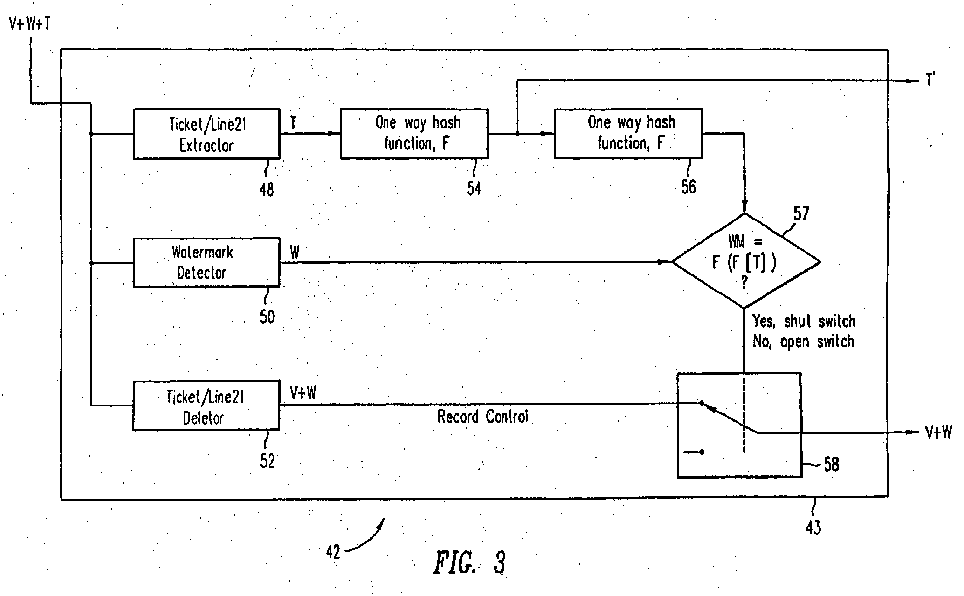

In Figures 1A and 1C the recorder 42 now receives the analog video signal V+W or V+W+T. Portions of the video recorder 42 are shown in Figure 3. Generally the recorder 42 is conventional but it has been adapted as described herein to include a record control function 43. Ticket/line 21 data extractor 48 extracts the ticket T and submits it to processing circuitry 54, 56 which performs the one-way hash function F two times on ticket T. If the result of this hashing at 54, 56 matches, at comparator 57, the watermark W in the video signal detected by a watermark detector 50, then a switch 58 is closed and recording by recorder 42 is allowed. That is, recording is allowed when the following conditional logic statement is returned as being true:

$$W = F ( F [T] )$$

When the switch 58 has been closed by the comparator 57, it couples the V+W signal extracted by ticket/line 21 detector circuitry 52 to an output terminal of switch 58. This output signal V+W is then coupled to the actual recording part (not shown) of the recorder 42, which may be conventional. In this respect, it should be noted that the recorder 42 need not be a digital recorder. [0027] The pay-to-record feature has now been implemented. If there is no ticket T detected by the record control 43 of the recorder 42 then the statement from the comparison is returned as "No". This would be the case if the consumer had chosen to only view the content. If the wrong ticket T is accompanying the video, perhaps because a recording of the video signal has already been made, then again the statement is returned as false and recording is not permitted.

When recording the video and the ticket to a recording media 46, for example, a disc as illustrated in Figure 1A, the ticket T is again subject to the function F to generate a new version of the ticket T'. In this case the cryptographic counter has been incremented:

$$T' = F ( T ).$$

Later when playing back the video content from the recording media 46 as shown in Figure 2, circuitry associated with a drive 50 in a player 52, such as a DVD player, again increments the ticket T by applying function F to it: T'' = F(T'). The drive 50 may perform this function, for example, when a DVD player 52 is implemented as a drive in a personal computer with a software or hardware associated MPEG decoder. Note that there is no requirement for a drive and rotating media; the media may be, e.g., semiconductor storage with appropriate access circuit circuitry. In any case, there is conventionally an interface (the drive or semiconductor storage control circuitry) to the actual recording (storage) medium.

Then the drive (or appropriate circuitry) performs the ticket incrementing to enhance security. (The player 52 may be the recorder 42 of Figure 1A or a play only device). Now at the MPEG decoder 54 in the player 52, the watermark W is again detected and checked against the current ticket T''. If a match is found, then playing is allowed and play control is implemented. In this case, the following equation must hold:

$$W = T'' = F ( T' ) = F ( F (T) )$$

An additional option under play control (also shown in Figure 2) at this point is to apply to the video signal analog video copy protection, for example, as available from Macrovision Corporation, such as automatic gain control and/or color stripe. This has the advantage that further VHS analog video copies are prevented (or at least are not usable) as well as the additional digital copies which are worked upon by equipment with watermark detectors.

The watermark described herein can be implemented in a number of different ways, depending upon the capability of the associated watermarking system. For instance, if the available watermarking system is able to carry sufficient data on a single field, the a sufficiently large amount of data can be carried such that no time varying mechanisms need be applied. In some embodiments the watermarking system carries 8-bits per frame; however only 4 bits are available for hashing seed purposes since 4 bits were needed for other uses. For security reasons it is desirable to use a 64-bit seed and 64-bit tickets. Thus, these embodiments require a minimum of 16 frames with the actual number of frames dependent upon the transport protocol employed based on the digital communication system design. Thus one embodiment requires typical communication protocols such as PPP which employ start and stop characteristics. Due to the nature of a video communication channel, it may be desirable to employ some form of forward error correction. Reed-Solomon encoding is one example of a forward error correction code that is commonly used for this purpose.

Some embodiments also employ 16-bits per field when carrying the ticket on line 21. Thus, both the ticket processing and watermark processing require buffers for storage such that decisions can be delayed and timed to occur when whole data values are available. Design of these types of buffers is within the competence of those skilled in the art.

There has been described above a method of using line 21 of analog video to carry the ticket between a STB and a recorder to enable pay-to-record features. However, any combination of a watermark and consumer controllable information in an STB could be used. This approach is also not limited to any particular TV standard. In particular, other video lines could be used to hold the ticket as long as they have the desired characteristics of being transmitted to the STB in a manner such that they can be controlled by the consumer through the STB.

If the video is being transmitted over a digital interface, such as IEEE-1394 ("Firewire") or an ATSC (high definition TV) 8-VSB signal, from the STB to a device such as a recorder which has storage capability then the ticket can still be controlled in the STB. In this case, the transmission or lack of transmission of the correct ticket is accomplished and the watermark/ticket combination still defines the copy-state. In these situations, the ticket could be transmitted using the MPEC User_data descriptor. In some cases, it may be desirable not to transmit any ticket at all, but in other cases, it may be desirable to transmit an incorrect ticket.

There are also other places in these video signals which could be used to transmit the ticket; however, the ticket is still controlled in the STB. The STB provided a way for ensuring that the content owner receives payment, whether that payment is for viewing only or for viewing and recording. Thus, it is the watermark and associated data under consumer control in the STB which are used.

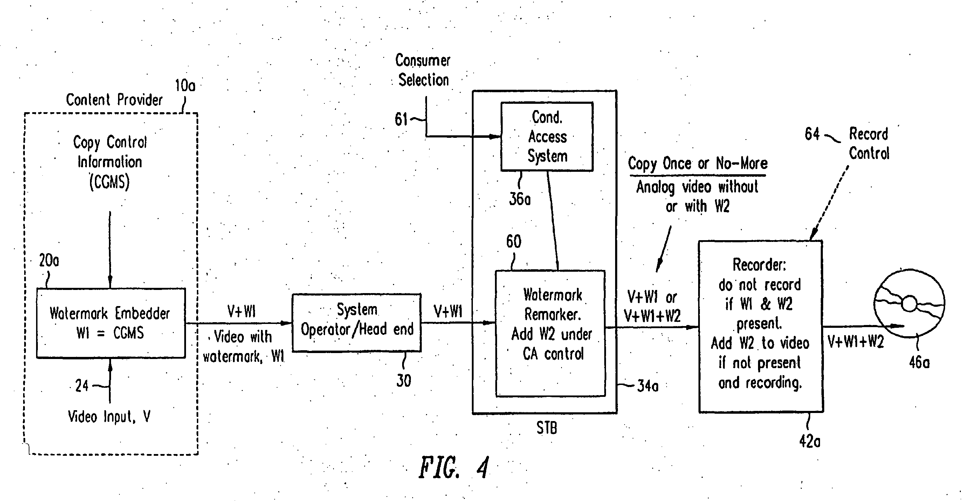

Figure 4 illustrates an embodiment of the present invention which uses a second watermark embedder located in the STB 34 as a watermark remarker 60. As illustrated in Figure 4, no ticket is used in this embodiment for creating video and record or view only video. In Figure 4, elements identical to those used in Figure 1A, or similar, have reference numbers similar to those of Figure 1A but with the letter "a" appended.

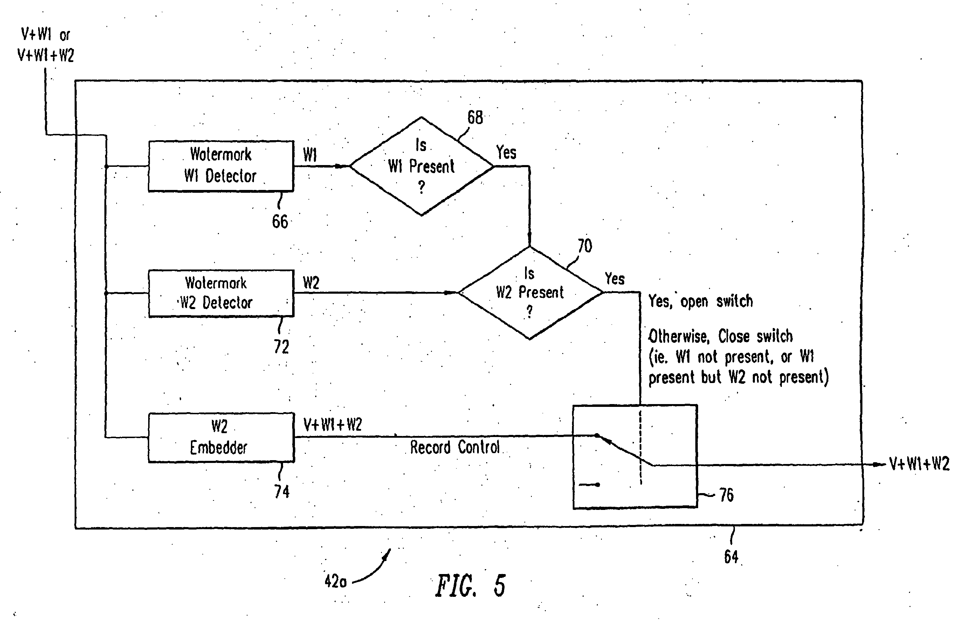

In the Figure 4 system, when the consumer selection 61 is to view, but not to record, the analog video signal output from the STB 34a is No-More-Copy: V+W1+W2. When the consumer selection 61 is to view and record, the video signal output from the STB 34a is Copy-Once: V+W1. Under these circumstances, the record control portion 64 of the associated recorder 42a operates as shown in Figure 5.

In the recorder 49a of Figure 5, which is otherwise conventional, a watermark W1 detector 66 first detects watermark W1. If no watermark W1 is found, then recording (copying) is allowed since it is assumed free-copying is available or the content has no copyright restrictions. If watermark W1 is detected at 68, then the watermark W2 detector 72 detects watermark W2. If W2 is not detected, then recording is allowed since this defines the one-copy-allowed state. The system "fails safe" in that recording is allowed. Note that W is typically some predetermined function of the active video. The fail safe provision is so that the user is not unnecessarily inconvenienced by false positive watermark detections. In general, watermarks are "woven into the fabric" of the video image. Removing them without degrading the base active video content is very difficult.

If W2 is detected along with W1 at 70, then no recording is allowed since this defines the no-more-copies state. This is accomplished by controlling switch 76, which in the case of a "yes" from the comparator 70 is set to be open. Otherwise (recording permitted) switch 76 is closed and video signal V+W1+W2 from W2 embedder 74 is output from switch 76 to be recorded by the remaining (not shown) conventional portions of the recorder 42a. If the video signal input to the recorder 42a has W1 but no W2 and is recorded on the media 46a, then the watermark W2 is embedded in the video signal prior to recording on the media 46a.

Also, it should be recognized that in Figure 5, while separate detectors 66, 72 are shown for W1 and W2, these may in fact be implemented in the same functional hardware (or software) element with internal reconfiguration as to allow differentiation of W1 and W2. Playback of media using this embodiment is simpler but it provides a lower level of security since no checking or detection of the watermarks is required. Also, in many cases a compliant recorder will be coupled to the player and will thereby prevent subsequent copies from being generated. A system without this coupling still has value since record control can provide value even without the added value of play control.

While the above described systems are disclosed in the context of separate devices for the set top box (STB) and the recorder, the functionality of both these devices may be integrated into a single apparatus.

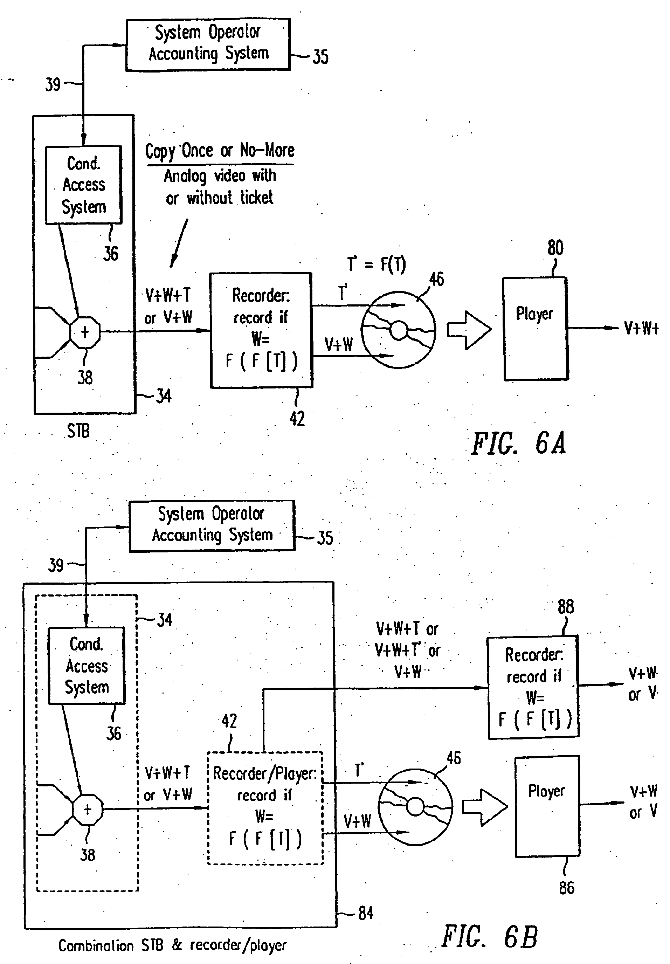

Figure 6A shows a system as described in Figure 1A, for example, and using the same reference numbers, but also showing a compliant player 80 which outputs, when playing the media 46, the video with the watermark and the ticket (V+W+T'').

Figure 6B shows a related system having the STB 34 combined with the recorder 42 in a single apparatus 84. As shown, the output signal stream from the recorder/player 42 may be applied to a recorder 88 if W+F (F (T)). Similarly, the media 46 may be played on player 86 outputting the video stream as shown, which is the video with the watermark and ticket (V+W+ T'') or merely the video with the watermark (V+W).

It is apparent that the systems of Figures 6A and 6B may be used in systems of the invention employing the above-described first watermark and second watermark method for controlling recording.

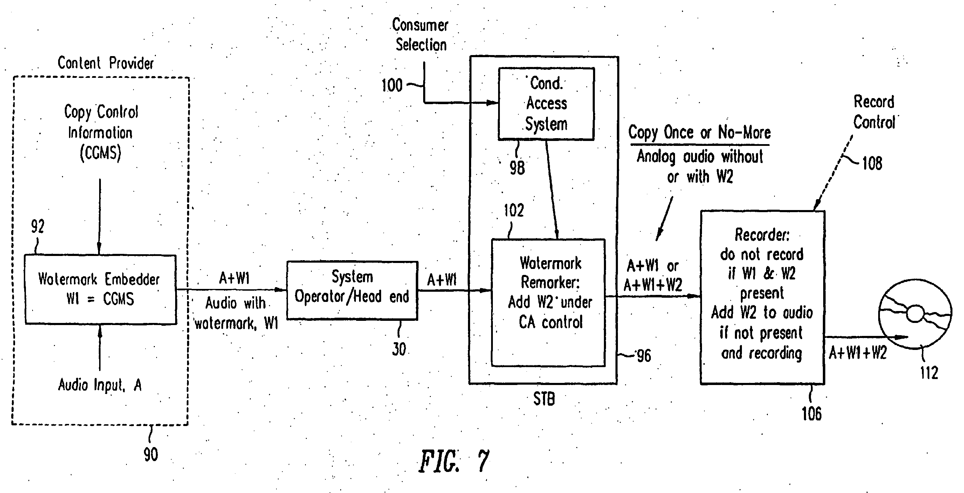

While the above disclosure is directed to video, a similar approach using the first watermark and second watermark may be applied to control the recording of audio. Figure 7 shows a system in many respects similar to that of Figure 4, but which has been adapted to provide enhanced audio distribution with the possibility of paying to record. The only structure labelled identically in Figure 7 to Figure 4 is the system operator headend 30. The other structures, although somewhat similar, have been redesignated to indicate that in this case they are adapted for audio purposes.

Hence the content provider 90, which is the source of the audio material, generates copy control information CGMS which is applied to an input terminal of a watermark embedder 92, to the other terminal of which is applied ordinary audio input signal A. The resulting output audio with watermark A+W1 is communicated, via conventional channels, to the system operator headend 30. From there, the audio signal A+W1 is sent over, for instance, the satellite or cable television distribution system to the STB 96. STB 96 includes a conditional access system 98 to which is applied a consumer selection on line 100.

The STB 96 also includes a watermark remarker 102 which adds watermark W2 under the control of the conditional access system 98. The watermark remarker 102 then outputs the watermarked audio stream in one of two forms. One form is the copy-once and the other is copy-no-more. In other words, the two forms are A+W1 or A+W1 +W2, the analog audio A with or without watermark W2 but always including watermark W1. The associated compliant recorder 106 receives this analog audio signal, and under control of its record control 108, does not record if W1 and W2 are present and adds W2 to the audio if it is not present and recorder 106 is in the recording mode, thereby outputting audio stream A+W1+W2 to record on associated media 112.

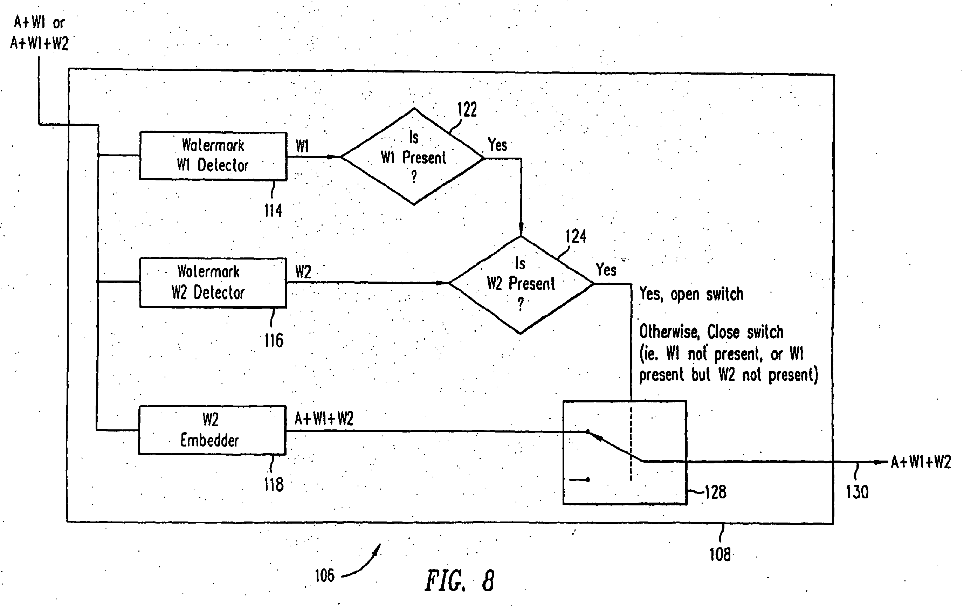

Figure 8 shows a block diagram of recorder 106 with further detail, showing how the record control portion 108 of audio recorder 106 includes a watermark W1 detector 114, a watermark W2 detector 116, and a watermark W2 embedder 118. The signal output from watermark W1 detector 114 is the indication of watermark W1 being present at 122. This is logically combined at 124 with the indication of whether watermark W2 is present. Only if both watermarks are present is switch 128 opened, thereby preventing recording; otherwise switch 128 is closed thereby communicating the input audio with the added watermarks A+W1+W2 on the output terminal 130 of record control portion 108. It is to be understood that Figure 8 only shows the record control portion 108 of recorder 106, the remaining portions which are not illustrated being the conventional recording portions.

It will be appreciated that variations in and modifications to the methods and systems as described and illustrated may be made within the scope of the appended claims.

## Claims

1. A method of controlling transmitting of a video or audio signal having a first embedded watermark (W1), comprising the steps of:

   receiving said video or audio signal and detecting whether said first watermark is present therein;

   determining if recording of the video or audio signal is to be prevented;

   if recording is to be prevented and if said first watermark is present in the video or audio signal, embedding a second watermark (W2) in the video or audio signal with the first embedded watermark (W1), and

   transmitting the video or audio signal with the first and second watermarks (A+W1+W2; V+W1+W2).

2. A method as claimed in Claim 1, further comprising the steps of:

   deciding if the recording is not to be prevented;
   reporting that recording is not to be prevented; and
   charging a fee for not preventing the recording.

3. A method as claimed in Claim 1, further comprising the steps of:

   if recording is permitted, recording the audio or video signal with the first embedded watermark (W1), and
   adding to the recorded audio or video signal the second watermark (W2).

4. A method as claimed in any preceding claim, wherein the second watermark (W2) is embedded in the video or audio signal in response to an action by a user.

5. A method as claimed in Claim 4, wherein said action by the user is an indication relating to payment.

6. A set top video or audio box (34, 34a, 96) for connection to an associated receiver, comprising:

an input terminal arranged to receive a video or audio signal (V, A) including a first embedded watermark (W1);
a conditional access control system (36, 36a, 98) having a control terminal (61, 100) for receiving a selection enabling recording of the video or audio signal;
a watermark embedder (60, 102) for embedding a second watermark (W2) in the audio or video signal and having a control terminal coupled to an output terminal of the conditional access control (36, 36a, 98) and receiving the video or audio signal from the input terminal, and having an output terminal;
means (34a; 42a) for detecting whether said first watermark is present in said video or audio signal;
wherein the conditional access control system causes the watermark embedder to output said video or audio signal with the first and second watermarks embedded therein when it has determined that recording of said video or audio signal is to be prevented and when said first watermark has been detected to be present in said video or audio signal, and otherwise to output said video or audio signal as received.

7. A set top box as claimed in Claim 6, further comprising:

a connection to an uplink or computer network (39), wherein the conditional access control (36, 36a, 98) transmits on the uplink/network an indication of the selection.


**Patentansprüche**

1. Verfahren zum Kontrollieren des Sendens eines Video- oder Audiosignals mit einem ersten eingebetteten Wasserzeichen (W1) mit den Schritten:

Empfangen des Video- oder Audiosignals und Detektieren, ob das erste Wasserzeichen darin vorhanden ist,
Feststellen, ob das Aufzeichnen des Video- oder Audiosignals verhindert werden soll,
wenn das Aufzeichnen verhindert werden soll und wenn das erste Wasserzeichen in dem Video- oder Audiosignal vorhanden ist, Einbetten eines zweiten Wasserzeichens (W2) in das Video- oder Audiosignal mit dem ersten eingebetteten Wasserzeichen (W1) und
Senden des Video- oder Audiosignals mit dem ersten und zweiten Wasserzeichen (A + W1 + W2; V + W1 + W2).

2. Verfahren nach Anspruch 1, das weiter die Schritte aufweist:

Entscheiden, wenn das Aufzeichnen nicht verhindert werden soll,
Berichten, dass das Aufzeichnen nicht verhindert werden soll, und
Erheben einer Gebühr für das Nicht-Verhindern des Aufzeichnens.

3. Verfahren nach Anspruch 1, das weiter die Schritte aufweist:

Wenn das Aufzeichnen erlaubt ist, Aufzeichnen des Audio- oder Videosignals mit dem ersten eingebetteten Wasserzeichen (W1) und Hinzufügen des zweiten Wasserzeichens (W2) zu dem aufgezeichneten Audio- oder Videosignal.

4. Verfahren nach einem der vorhergehenden Ansprüche, wobei das zweite Wasserzeichen (W2) in Reaktion auf eine Aktion durch einen Anwender in das Video- oder Audiosignal eingebettet wird.

5. Verfahren nach Anspruch 4, wobei die Aktion durch den Anwender ein Hinweis in Bezug auf Zahlung ist.

6. Set-Top-Video- oder-Audio-Box (34, 34a, 96) zum Verbinden mit einem zugeordneten Empfänger, mit:

einem Eingangsanschluss, der dazu ausgestaltet ist, ein Video- oder Audiosignal (V, A) einschließlich eines ersten eingebetteten Wasserzeichens (W1) zu empfangen,
einem System zur Kontrolle des bedingten Zugriffs (36, 36a, 98) mit einem Kontrollanschluss (61, 100) zum Empfang einer Auswahl zum Zulassen der Aufzeichnung des Video- oder Audiosignals,
einer Wasserzeichen-Einbettungseinrichtung (60, 102), die zum Einbetten eines zweiten Wasserzeichens (W2) in das Audio- oder Videosignal dient und einen Kontrollanschluss hat, der mit einem Ausgangsanschluss des Systems zur Kontrolle des bedingten Zugriffs (36, 36a, 98) verbunden ist, und die das Video- oder Audiosignal von dem Eingangsanschluss empfängt und die einen Ausgangsanschluss hat,
einer Einrichtung (34a; 42a) zum Detektieren, ob das erste Wasserzeichen in dem Video- oder Audiosignal vorhanden ist,
wobei das System zur Kontrolle des bedingten Zugriffs die Wasserzeichen-Einbettungseinrichtung dazu veranlasst, das Video- oder Audiosignal mit den ersten und zweiten Wasserzeichen eingebettet darin auszugeben, wenn es festgestellt hat, dass das Aufzeichnen des Video- oder Audiosignals verhindert werden soll, und wenn das erste Wasserzeichen in dem Video- oder Audiosignal als vorhanden detektiert worden ist, und anderenfalls das Video- oder Audiosignal wie empfangen auszugeben.

7. Set-Top-Box nach Anspruch 6, weiterhin mit:

    einer Verbindung zu einer Aufwärtsverbindung, wobei das System (36, 36a, 98) zur Kontrolle des bedingten Zugriffs ein Anzeichen der Auswahl zu der Aufwärtsverbindung dem Netzwerk überträgt.

**Revendications**

1. Procédé de commande de la transmission d'un signal vidéo ou audio ayant un premier filigrane (W1) incorporé, comprenant les étapes qui consistent à :

    recevoir ledit signal vidéo ou audio et détecter si ledit premier filigrane est présent dedans ;
    déterminer si l'enregistrement du signal vidéo ou audio doit être empêché ;
    si l'enregistrement doit être empêché, et si ledit premier filigrane est présent dans le signal vidéo ou audio, incorporer un deuxième filigrane (W2) dans le signal vidéo ou audio avec le premier filigrane (W1) incorporé, et
    transmettre le signal vidéo ou audio avec les premier et deuxième filigranes (A+W1+W2 ; V+W1+W2).

2. Procédé selon la revendication 1, comprenant en outre les étapes qui consistent à :

    décider si l'enregistrement ne doit pas être empêché ;
    rapporter que l'enregistrement ne doit pas être empêché ; et
    appliquer des frais dès lors qu'on ne doit pas empêcher l'enregistrement.

3. Procédé selon la revendication 1, comprenant en outre les étapes qui consistent à :

    enregistrer, si l'enregistrement est autorisé, le signal audio ou vidéo avec le premier filigrane (W1) incorporé, et
    ajouter au signal audio ou vidéo enregistré le deuxième filigrane (W2).

4. Procédé selon l'une quelconque des revendications précédentes, où le deuxième filigrane (W2) est incorporé dans le signal vidéo ou audio en réponse à une action par un utilisateur.

5. Procédé selon la revendication 4, où ladite action par l'utilisateur est une indication relative à un paiement.

6. Boîtier (34, 34a, 96) décodeur vidéo ou audio à connecter à un récepteur associé, comprenant :

    une borne d'entrée agencée pour recevoir un signal (V, A) vidéo ou audio comprenant un premier filigrane (W1) incorporé :

        un système (36, 36a, 98) de commande d'accès conditionnel ayant une borne (61, 100) de commande pour recevoir une sélection permettant d'enregistrer le signal vidéo ou audio ;
        un incorporateur (60, 102) de filigrane destiné à incorporer un deuxième filigrane (W2) dans le signal audio ou vidéo et ayant un borne de commande couplée à une borne de sortie de la commande (36, 36a, 98) d'accès conditionnel et pour recevoir le signal vidéo ou audio depuis la borne d'entrée, et ayant une borne de sortie ;
        des moyens (34a ; 42a) destinés à détecter si ledit premier filigrane est présent dans ledit signal vidéo ou audio ;
        où le système de commande d'accès conditionnel amène l'incorporateur de filigrane à délivrer en sortie ledit signal vidéo ou audio, les premier et deuxième filigranes étant incorporés dans ce dernier lorsqu'il a été déterminé que l'enregistrement dudit signal vidéo ou audio doit être empêché et lorsqu'on a détecté que ledit premier filigrane est présent dans ledit signal vidéo ou audio, et sinon, à délivrer en sortie ledit signal vidéo ou audio tel qu'il a été reçu.

7. Boîtier décodeur selon la revendication 6, comprenant en outre :

    une liaison à une liaison montante ou réseau d'ordinateurs (39), où la commande (36, 36a, 98) d'accès conditionnel transmet sur la liaison montante/le réseau une indication de la sélection.

Content Provider 10

Seed Generator
12

$T = F(S)$
16

$S$

$T$

Distributed on floppy

$W = F[ F(F[S]) ]$
20

$V+W$

24

Video Input, V

Video with watermark, W
27

System Operator/Head end
30

Dist. in MPEG data

$T$

$V+W$

Consumer Selection

System Operator Accounting System
35

39

Cond. Access System
36

Copy Once or No-More
Analog video with or without ticket

$V+W+T$ or $V+W$

38

STB
34

Record Control
43

$T^{I} = F(T)$

$T^{I}$

Recorder: record if $W = F ( F [T] )$
42

$V+W$

46

FIG. 1A

Video ─────────────────────────────────────────────────────────────┐

24

S ──────► ┌──────────────┐ ──► ┌──────────────┐ ──► ┌──────────────┐ ──► ┌──────────────┐ ──► V+W
          │ One way      │      │ One way      │      │ One way      │      │              │  27  Video with
          │ hash         │      │ hash         │      │ hash         │      │ Watermark    │      watermark
          │ function, F  │      │ function, F  │      │ function, F  │      │ Embedder     │      with data
          └──────────────┘      └──────────────┘      └──────────────┘      └──────────────┘

              22a                   22b                   22c        Data F [F(F(S)]]) for        23
                                                                     Insertion in watermark

20

*FIG. 1B*

DVD Player                                                            52
                                                                              Play
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐    Control
│               T" = F (T')                                          │
│                                                                    │
│        T'    ┌──────────┐   T"    ┌──────────┐                     │      No-More-Copy
│    ──────────►          ──────────►  MPEG    │      V+W            ──────► ─────────────────
│              │  Drive   │          │ Decoder: │───────────────►     │      Analog video with
│    V+W       │          │   V+W    │ play if  │                     │      no ticket, with APS
│    ──────────►          ──────────► W = T"   │                     │
│              └──────────┘          └──────────┘                     │
│                                                                    │
46            50                          54                          │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘

*FIG. 2*

EP 1 335 595 B1

FIG. 1C

Content Provider — 10

Seed Generator — 12

T = F (S)

W = F [F( F [S] ) ] — 20

24 — Video Input, V

S

Line 21 of video — T

V+W — Video with watermark, W — 27

System Operator/Head end — 30

Closed caption data in MPEG — T

V+W

Consumer Selection

System Operator Accounting System — 35

39

Cond. Access System — 36

38 (+)

41 — 34a

STB

Copy Once or No-More
Analog video with or without ticket

V+W+T or V+W

Recorder: record if W = F ( F [T] ) — 42

Record Control

T' = F (T)

T'

V+W

46

*FIG. 1D*

V+W+T

EP 1 335 595 B1

```
                                                            T'

  ┌──────────────┐      T   ┌──────────────┐      ┌──────────────┐
  │ Ticket/Line21│─────────>│ One way hash │─────>│ One way hash │
  │  Extractor   │          │ function, F  │      │ function, F  │
  └──────────────┘          └──────────────┘      └──────────────┘
         48                        54                    56
                                                              ◇ 57
                                                          WM =
                                                        F (F [T] )
  ┌──────────────┐      W                                    ?
  │  Watermark   │────────────────────────────────────>
  │   Detector   │                                    Yes, shut switch
  └──────────────┘                                    No, open switch
         50

  ┌──────────────┐    V+W
  │ Ticket/Line21│──────────────────────────┐
  │   Deletor    │        Record Control     │            ┌────────┐
  └──────────────┘                           └───────────>│        │──> V+W
         52                                                │        │
                                                           └────────┘
                                                              ~ 58
```

42

*FIG. 3*

43

Content Provider 10a

Copy Control Information (CGMS)

20a

Watermark Embedder W1 = CGMS

24

Video Input, V

V+W1 · Video with watermark, W1

System Operator/Head end

30

V+W1

Consumer Selection

61

Cond. Access System

36a

60

Watermark Remarker. Add W2 under CA control

34a

STB

Copy Once or No-More
Analog video without or with W2

V+W1 or V+W1+W2

64 Record Control

Recorder: do not record if W1 & W2 present. Add W2 to video if not present and recording.

42a

V+W1+W2

46a

FIG. 4

V+W1 or
V+W1+W2

Watermark
W1 Detector

66

W1

Is
W1 Present
?

68

Yes

Watermark
W2 Detector

72

W2

Is
W2 Present
?

70

Yes

Yes, open switch

Otherwise, Close switch
(ie. W1 not present, or W1
present but W2 not present)

W2
Embedder

74

V+W1+W2

Record Control

76

V+W1+W2

64

42o

*FIG. 5*

EP 1 335 595 B1

FIG. 6A

FIG. 6B

EP 1 335 595 B1

Content Provider

Copy Control
Information
(CGMS)

92

Watermark Embedder
W1 = CGMS

Audio Input, A

90

A+W1
Audio with
watermark, W1

System
Operator/Head end

30

A+W1

Consumer
Selection

100

Cond.
Access
System

98

102

Watermark
Remarker:
Add W2 under
CA control

96

STB

Copy Once or No-More
Analog audio without
or with W2

A+W1 or
A+W1+W2

Record
Control

108

Recorder:
do not record
if W1 & W2
present
Add W2 to audio
if not present
and recording

106

A+W1+W2

112

FIG. 7

A+W1 or
A+W1+W2

Watermark
W1 Detector
W1
114

Is
W1 Present
?
122

Yes

Watermark
W2 Detector
W2
116

Is
W2 Present
?
124

Yes

Yes, open switch

Otherwise, Close switch
(ie. W1 not present, or W1
present but W2 not present)

W2
Embedder
A+W1+W2
118

128

A+W1+W2

130

108

106

FIG. 8

**EP 1 335 595 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0860997 A